# EUROPÄISCHE PATENTSCHRIFT

(11) **EP 1 140 584 B1**
(45) Veröffentlichungstag und Bekanntmachung des Hinweises auf die Patenterteilung: **15.01.2003**
(21) Anmeldenummer: 00979419.9
(22) Anmeldetag: 12.10.2000
(51) Int. Cl.: B60S 1/34

(54) **WISCHERLAGER FÜR EINE WISCHVORRICHTUNG EINES FAHRZEUGS UND VERFAHREN ZUM MONTIEREN EINES WISCHERLAGERS**
WIPER BEARING FOR A WIPER DEVICE OF A VEHICLE AND FOR MOUNTING A WIPER BEARING
PALIER D'ESSUIE-GLACE POUR UN ENSEMBLE ESSUIE-GLACE DE VEHICULE A MOTEUR ET PROCEDE DE MONTAGE DUDIT PALIER

(30) Priorität: 21.10.1999 DE 19950739
(43) Veröffentlichungstag der Anmeldung: 10.10.2001
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: DE0003586
(87) Internationale Veröffentlichungsnummer: WO01028827

(56) Entgegenhaltungen:
- DE-A- 19 542 875
- PATENT ABSTRACTS OF JAPAN vol. 1996, no. 02, 29. Februar 1996 (1996-02-29) -& JP 07 251715 A (ASMO CO LTD), 3. Oktober 1995 (1995-10-03)

## Beschreibung

Die Erfindung betrifft ein Wischerlager für eine Wischvorrichtung eines Fahrzeugs, eine Lagerwelle enthaltend, die in einem Lagergehäuse aufgenommen und mit einem Lagerelement und einem Wischarm derart verbunden ist, dass ein Drehmoment vom Lagerelement auf den Wischarm übertragbar ist, wobei die Lagerwelle ein axiales Anschlagmittel mit einer Anschlagfläche aufweist, entsprechend dem einleitenden Teil des Anspruchs 1.

Ferner bezieht sich die Erfindung auf ein Verfahren zum Montieren eines Wischerlagers, entsprechend dem Oberbegriff des Anspruchs 19.

Ein derartiges Wischerlager und Verfahren zu dessen Montage ist aus der DE 195 42 875 A bekannt.

### Stand der Technik

Es sind Wischerlager für eine Wischvorrichtung eines Fahrzeugs bekannt, die nachteilhafterweise eine verhältnismäßig hohe Anzahl von Montageteilen aufweisen und deshalb in Bezug auf ihre Montage einen relativ hohen Aufwand erfordern. Die zum Herstellen eines bekannten Wischerlagers notwendige hohe Anzahl an Montageteilen wirkt sich insbesondere nachteilhaft in Bezug auf die entsprechenden Fertigungskosten, die Montagezeiten und die Qualitätssicherung des Wischerlagers aus. Die verhältnismäßig hohe Anzahl an Konstruktionsteilen zum Herstellen eines bekannten Wischerlagers ist unter anderem darauf zurückzuführen, dass für eine korrekte Funktionsweise des Wischerlagers ein oder mehrere Einstellteile, Sicherungselemente, Dichtelemente und/oder Federelemente vorzusehen sind.

### Vorteile der Erfindung

Das erfindungsgemäße Wischerlager ist dadurch gekennzeichnet, dass die Anschlagfläche mit einer Kontaktfläche des Lagergehäuses in Wirkverbindung steht, wobei die Kontaktfläche und/oder die Anschlagfläche oberflächenstrukturiert sind. Aufgrund der Oberflächenstrukturierung der Kontaktfläche und/oder der Anschlagfläche ist es möglich, auf einfache und effektive Weise mittels der Wirkverbindung zwischen Anschlagfläche und Kontaktfläche gleichzeitig eine Einstell-, Sicherungs-, Toleranzausgleichs- und Dichtfunktion zuverlässig zu erfüllen. Diese unterschiedlichen Funktionen sind für eine korrekte Arbeitsweise des Wischerlagers von Bedeutung und können vorteilhafterweise durch die oberflächenstrukturierte Kontaktfläche und/oder die oberflächenstruktierte Anschlagfläche mittels deren Wirkverbindung erfüllt werden. Dabei ist eine derartige Oberflächenstrukturierung fertigungstechnisch verhältnismäßig einfach an der entsprechenden Fläche realisierbar. Da die Oberflächenstrukturierung an der Kontaktfläche des Lagergehäuses beziehungsweise (alternativ oder zusätzlich) an der Anschlagfläche der Lagerwelle vorgesehen ist, ist es möglich, die Anzahl der Konstruktionsteile zum Herstellen des Wischerlagers auf ein Minimum, das heißt auf zwei Bauteile (Lagerwelle, Lagergehäuse) zu beschränken. Das erfindungsgemäße Wischerlager ist somit fertigungstechnisch einfach herzustellen und besonders montagefreundlich aufgebaut.

Mit Vorteil umschließt das Lagergehäuse die Lagerwelle radial und weist die Lagerwelle zwei aus dem Lagergehäuse vorstehende Enden auf, wobei ein erstes Ende an dem Lagerelement befestigt und ein zweites Ende mit dem Wischarm verbunden ist. Eine derartige Anordnung der Lagerwelle und des Lagergehäuses ermöglicht es, ein als verhältnismäßig kostengünstiges Rohr-Halbzeug ausgebildetes Lagergehäuse einzusetzen. Die zwei aus dem Lagergehäuse hervorstehenden Enden der Lagerwelle ermöglichen ein montagefreundliches Befestigen beziehungsweise Verbinden dieser Baugruppe (Lagerwelle, Lagergehäuse) an dem Lagerelement und an dem Wischarm. Dabei kann der mittlere Bereich der Lagerwelle um seinen gesamten Umfang von dem rohrförmigen Lagergehäuse derart aufgenommen sein, dass die Lagerwelle in radialer Richtung in dem Lagergehäuse fest, das heißt nicht radial verschiebbar, gelagert ist.

Vorzugsweise ist die Anschlagfläche der Lagerwelle eben und die Kontaktfläche des Lagergehäuses oberflächenstrukturiert ausgebildet. Da das Lagergehäuse in Form eines rohrförmigen Halbzeugs auch aus einem nicht-metallischen Werkstoff, wie zum Beispiel Kunststoff, hergestellt sein kann, ist es sowohl aus fertigungstechnischen als auch aus montagerelevanten Gründen, insbesondere in Bezug auf die während der Montage in die Lagerwelle und das Lagergehäuse aufzubringenden äußeren Verbindungskräfte, vorteilhaft, die Oberflächenstrukturierung an der Kontaktfläche des Lagergehäuses vorzusehen und die Anschlagfläche der Lagerwelle, welche üblicherweise aus einem metallischen Werkstoff hergestellt ist, eben auszugestalten.

Gemäß einer bevorzugten Ausführungsform ist das Anschlagmittel als ringförmiger, von der Lagerwelle radial abstehender, geschlossener Bund ausgebildet. Ein derartig ausgebildeter Bund ist fertigungstechnisch verhältnismäßig einfach an einer vorzugsweise aus einem metallischen Werkstoff hergestellten Lagerwelle realisierbar. Ferner erlaubt ein als Bund ausgestaltetes Anschlagmittel das Herstellen eines besonders kompakt aufgebauten Wischerlagers, da der radial von der Lagerwelle abstehende Bund mit der ringförmig ausgebildeten Anschlagfläche der Lagerwelle versehen ist, welche mit einer als ringförmige Stirnfläche ausgebildeten Kontaktfläche des Lagergehäuses derart in Wirkkontakt treten kann, dass nach Herstellen der Baugruppe Lagerwelle/Lagergehäuse eine zuverlässige, montagefreundliche und kompakte axiale Wirkverbindung zwischen der Lagerwelle und dem Lagergehäuse erhaltbar ist.

Vorteilhafterweise ist die oberflächenstrukturierte Kontaktfläche als ringförmige Stirnfläche des einen in Bezug auf die Längsachse rotationssymmetrischen und insbesondere zylindrischen Aufnahmeraum aufweisenden Lagergehäuses ausgebildet. Ein derartig konzipiertes Lagergehäuse zeichnet sich durch verhältnismäßig niedrige Fertigungskosten aus und ist in montagefreundlicher Weise mit der entsprechend ausgebildeten Lagerwelle zu einer kompakten Baugruppe verbindbar.

Mit Vorteil weist die oberflächenstrukturierte Kontaktfläche ein axiales Dichtmittel auf, welches als geschlossener Ring mit der Anschlagfläche des Bunds in Berührungskontakt steht unter Ausbildung eines hermetischen Abschlusses. Ein als geschlossener Ring ausgebildetes axiales Dichtmittel auf der Kontaktfläche des Lagergehäuses eignet sich besonders zum Herstellen eines hermetischen Abschlusses zwischen oberflächenstrukturierter Kontaktfläche und Anschlagfläche.

Vorzugsweise ist das Dichtmittel als wenigstens ein Ringwulst auf der Kontaktfläche des Lagergehäuses ausgebildet und das Lagergehäuse aus einem Material hergestellt, das eine in Bezug auf das Material der Lagerwelle geringere Eigensteifigkeit aufweist. Die Ausbildung eines Ringwulstes als Dichtmittel auf der Kontaktfläche eines plastisch verformbaren Lagergehäuses eignet sich besonders zur Erfüllung der verschiedenen Funktionen (Einstell-, Sicherungs-, Dichtungs- und Toleranzausgleichsfunktion), welche alle durch die Wirkverbindung zwischen Lagerwelle und Lagergehäuse erfüllt werden.

Gemäß einer bevorzugten Ausführungsform erstreckt sich die Anschlagfläche in radialer Richtung über die gesamte Breite des Bunds. Eine ebene, sich in radialer Richtung über den gesamten Bund erstreckende Anschlagfläche ist fertigungstechnisch besonders einfach herstellbar und erlaubt ferner einen montagefreundlichen Zusammenbau des Wischerlagers, da das Lagergehäuse lediglich durch eine axiale Annäherung entlang der Längsachse der Lagerwelle mit der Anschlagfläche in Wirkkontakt gebracht werden muss und beispielsweise keine speziellen Drehbewegungen zur Einstellung einer bestimmten Montageposition der Lagerwelle notwendig sind.

Gemäß einer weiteren, alternativen Ausführungsform ist die Anschlagfläche als Grundfläche einer Aufnahmenut ausgebildet, in welcher das Dichtmittel radial nach außen abgeschirmt ist. Ein mit einer Aufnahmenut versehener Bund ist fertigungstechnisch verhältnismäßig einfach problemlos herstellbar und kann vorteilhafterweise als Aufnahme über den die oberflächenstrukturierte Kontaktfläche aufweisenden Stirnbereich des rohrförmigen Lagergehäuses genutzt werden. In dieser Weise wird der mehrfach genutzte Kontakt zwischen Kontaktfläche und Anschlagfläche vor eventuell störenden Außeneinflüssen geschützt.

Gemäß einer vorteilhaften Ausführungsform ist die Lagerwelle an dem Lagerelement mittels einer Nietverbindung befestigt. Das Herstellen einer Nietverbindung zwischen Lagerwelle und Lagerelement ermöglicht eine schnelle, zuverlässige und kompakte Befestigung des Wischerlagers am Lagerelement. Dabei besteht die Möglichkeit, eine äußere, ringförmige Auflagefläche des Bunds zur Einleitung einer parallel zur Längsachse in Richtung Lagerelement gerichteten Druckkraft auszunutzen, welche zum Herstellen der Nietverbindung notwendig ist.

Gemäß einer weiteren, vorteilhaften Ausführungsform ist die Lagerwelle an dem Lagerelement mittels einer kraftschlüssigen Verbindung befestigt. Auch die Befestigung der Lagerwelle an dem Lagerelement mittels einer kraftschlüssigen Verbindung, wie beispielsweise durch eine Verstemmung des zweiten Endes der Lagerwelle mit dem entsprechend ausgebildeten Lagerelement, ist fertigungstechnisch einfach und zuverlässig realisierbar. Dabei ist auch bei einer kraftschlüssigen Verbindung von Lagerelement und Lagerwelle eine kompakte Ausgestaltung des Wischerlagers möglich.

Die Lagerwelle kann vorteilhafterweise einteilig ausgebildet sein. Eine einteilig ausgebildete Lagerwelle erlaubt ein besonders montagefreundliches Herstellen des Wischerlagers, da das Wischerlager in diesem Fall lediglich aus zwei Bauteilen besteht, das heißt, aus der einteiligen Lagerwelle und dem einteiligen Lagergehäuse. Eine einteilig ausgebildete Lagerwelle kann fertigungstechnisch verhältnismäßig einfach, beispielsweise mittels Kaltumformung, hergestellt werden.

Gemäß einer weiteren Ausführungsform kann die Lagerwelle aus einem Kopfteil und einem an diesem zu einer Längsachse der Lagerwelle koaxial befestigten und insbesondere angeschweißten Schaftteil bestehen. In diesem Fall besteht die Lagerwelle aus zwei separat gefertigten Bauteilen, das heißt einem Kopfteil und einem Schaftteil. Der Kopfteil kann fertigungstechnisch verhältnismäßig einfach als Kaltfliespressteil hergestellt werden. Bei dem Schaftteil handelt es sich um ein geometrisch besonders einfach ausgebildetes und fertigbares Bauteil. Die zwei getrennten Bauteile können mittels einer Schweißverbindung, insbesondere mittels einer vorteilhaft anwendbaren Kondensatorentladungsschweißung, miteinander in schneller und zuverlässiger Weise verbunden werden, um anschließend als Lagerwelle mit dem Lagergehäuse zu einem kompakten Wischerlager zusammenmontiert zu werden.

Vorteilhafterweise ist der Schaftteil als Vollwelle ausgebildet. Mit einem als Vollwelle ausgebildeten Schaftteil kann fertigungstechnisch in verhältnismäßig einfacher Weise, beispielsweise mittels einer Stirnschweißung, eine besonders stabile Lagerwelle hergestellt werden.

Mit Vorteil ist der Schaftteil als Rohr ausgebildet. Die zweiteilige Ausführungsform der Lagerwelle erlaubt den Einsatz eines als Rohr ausgebildeten Schaftteils. Dies ermöglicht eine erhebliche Gewichtsreduzierung des Wischerlagers, da die Lagerwelle üblicherweise aus einem metallischen Werkstoff hergestellt ist. Ferner ist ein als Rohr ausgebildetes Schaftteil als besonders kostengünstiges Bauteil herstellbar.

Vorzugsweise weist der Bund eine Auflagefläche für den Wischarm auf. Durch die Vorsehung einer Auflagefläche des Bunds für den Wischarm ist es möglich, eine besonders kompakte und stabile Verbindung zwischen Wischerlager und Wischarm zu schaffen. Dabei ist diese Verbindung vorteilhafterweise am ersten Ende der Lagerwelle, welches sich in Längsrichtung von der Auflagefläche des Bunds nach außen hin erstreckt, ausgebildet.

Vorteilhafterweise weist die Lagerwelle eine Anschlagkante für das Lagerelement auf. Eine derartige Anschlagkante ermöglicht es, dass der Abstand zwischen Wischarm und Lagerelement in zuverlässiger und montagefreundlicher Weise wiederholbar unter Ausnutzung einer infolge einer Druckbeanspruchung sich einstellenden plastischen Verformung des Dichtmittels des Lagergehäuses einstellbar ist.

Mit Vorteil ist eine mit dem Lagerelement in Berührungskontakt kommende Stirnfläche des Lagergehäuses mit einem Dichtmittel versehen. Da auch zwischen dem Lagerelement und dem Lagergehäuse nach der Befestigung des Wischerlagers an dem Lagerelement ein Flächenkontakt vorliegt, ist es vorteilhaft, auch hier die entsprechende Stirnfläche des Lagergehäuses mit einem Dichtmittel zu versehen. Dabei kann diese zweite Stirnfläche ähnlich oberflächenstrukturiert sein wie die erste Stirnfläche, welche mit der Anschlagfläche der Lagerwelle in Wirkverbindung steht.

Das erfindungsgemäße Verfahren ist gekennzeichnet durch folgende Verfahrensschritte:
- Einführen der Lagerwelle mit ihrem Schaft in das Lagergehäuse bis zum Herstellen eines Berührungskontakts zwischen der Kontaktfläche des Lagergehäuses und der Anschlagfläche der Lagerwelle;
- Beaufschlagen der Lagerwelle und/oder des Lagergehäuses mit einer axialen Druckkraft unter Erzielung einer elastischen und/oder plastischen Verformung der Oberflächenstrukturierung und gleichzeitiges Herstellen einer Befestigung der Lagerwelle mit ihrem ersten Ende an dem Lagerelement mittels einer axialen Druckkraft;
- Verbinden des Wischarms mit dem zweiten Ende der Lagerwelle.

Dadurch wird das Herstellen einer dichtenden Verbindung des Lagergehäuses mit der Lagerwelle und gleichzeitig einer Befestigung der Lagerwelle an dem Lagerelement unter Erzielung eines Toleranzausgleichs im Wischerlager mittels elastischer und/oder plastischer Verformung des axialen Dichtmittels durch die bei der Montage axial wirkende Druckkraft ermöglicht. Dabei ist das Wischerlager montagefreundlich und schnell zusammenbaubar. Da das Wischerlager nur aus drei beziehungsweise zwei Einzelbauteilen besteht, nämlich der Lagerwelle (Kopfteil, Schaftteil) und dem Lagergehäuse, ist eine Falschmontage des Wischerlagers praktisch ausgeschlossen.

Weitere vorteilhafte Ausgestaltungen der Erfindung ergeben sich aus der Beschreibung.

### Zeichnungen

Die Erfindung wird nachfolgend in mehreren Ausführungsbeispielen anhand zugehöriger Zeichnungen näher erläutert. Es zeigen:
- Figur 1: eine schematische Ansicht eines längsgeschnittenen, an einem Lagerelement befestigten Wischerlagers;
- Figur 2: eine Einzelheit in vergrößertem Maßstab der Verbindung zwischen Lagergehäuse und Lagerwelle;
- Figur 3: eine Einzelheit in vergrößertem Maßstab einer alternativen Ausführungsform der Verbindung zwischen Lagergehäuse und Lagerwelle;
- Figur 4: eine schematische Seitenansicht eines längsgeschnittenen, mit einem Lagerelement verbundenen Wischerlagers gemäß einer dritten Ausführungsform;
- Figur 5: eine schematische Seitenansicht eines längsgeschnittenen, mit einem Lagerelement verbundenen Wischerlagers entsprechend einer vierten Ausführungsform;
- Figur 6: eine schematische Seitenansicht einer längsgeschnittenen Lagerwelle gemäß Figur 5 im nicht-verbundenen Zustand;
- Figur 7: mehrere schematische, längsgeschnittene Seitenansichten, verschiedene Montageschritte zum Herstellen des Wischerlagers gemäß Figur 1 darstellend;
- Figur 8: eine schematische, perspektivische Ansicht einer teilweise in ein Lagergehäuse eingeführten Lagerwelle;
- Figur 9: eine schematische Seitenansicht eines längsgeschnittenen, an einem Lagerelement befestigten und mit einem Wischarm verbundenen Wischerlagers und
- Figur 10: eine schematische Seitenansicht einer teilweise dargestellten Lagerwelle entsprechend einer weiteren Ausführungsform.

### Beschreibung der Erfindung

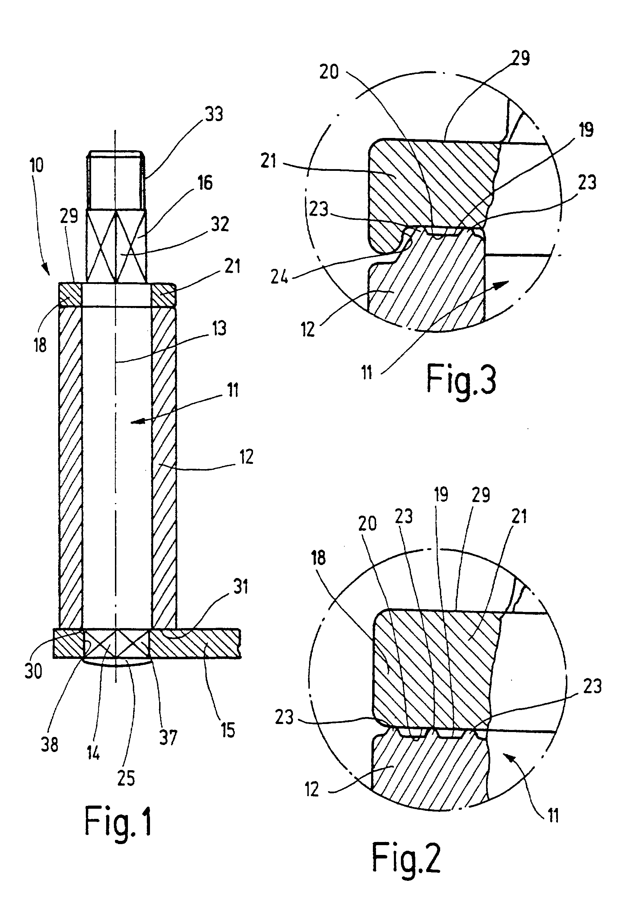

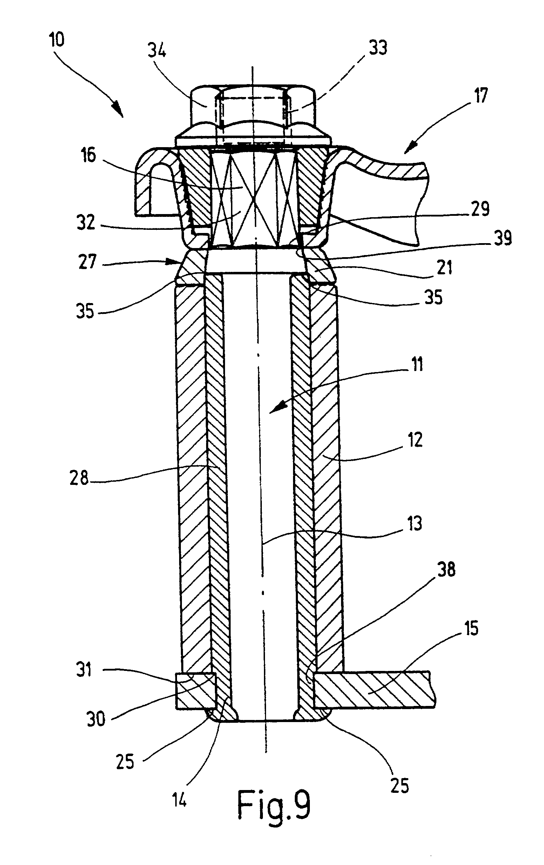

Unter Bezugnahme auf Figur 1 ist ein allgemein mit 10 bezeichnetes Wischerlager dargestellt, welches an einem Lagerelement 15 befestigt ist. Das Wischerlager 10 ist für eine Wischvorrichtung eines Fahrzeugs (nicht dargestellt) vorgesehen und enthält eine Lagerwelle 11, die in einem Lagergehäuse 12 koaxial zu einer Längsachse 13 aufgenommen und mit einem Lagerelement 15 drehfest verbunden ist. Das Wischerlager 10 dient zur Übertragung eines Drehmoments vom Lagerelement 15 auf einen Wischarm 17 (siehe auch Figur 9). Das Lagergehäuse 12 ist als rohrförmiges Bauteil ausgebildet und in Bezug auf die Lagerwelle 11 derart koaxial angeordnet, dass es die Lagerwelle 11 radial, das heißt umfangsförmig, umfasst. Die Lagerwelle 11 weist zwei aus dem Lagergehäuse 12 vorstehende Enden 14, 16 auf, wobei ein erstes Ende 14 zur Befestigung des Wischerlagers 10 an dem Lagerelement 15 und ein zweites Ende 16 zur Verbindung mit dem Wischarm 17 (siehe auch Figur 9) dient. Die Lagerwelle 11 ist an ihrem zweiten Ende 16 mit einem vorzugsweise als Außensechskant ausgebildeten Anschlusselement 32 versehen, an das sich endseitig ein mit einem Außengewinde 33 versehener Abschnitt anschließt. Das Anschlusselement 32 dient zur drehfesten Verbindung des Wischerlagers 10 mit dem Wischarm 17, während der mit dem Gewinde 33 versehene Abschnitt des zweiten Endes 16 der Lagerwelle 11 zur axialen Fixierung des Wischarms 17 auf der Auflagefläche 29 des Bunds 21 der Lagerwelle 11 vorgesehen ist. Auch das erste Ende 14 der Lagerwelle 11 ist mit einem als Außensechskant ausgebildeten Befestigungsabschnitt 37 versehen, welcher formschlüssig in einer als Innensechskant entsprechend ausgebildeten Durchgangsöffnung 38 des Lagerelements 15 aufgenommen ist. Die Befestigung des Wischerlagers 10 beziehungsweise der Lagerwelle 11 an dem Lagerelement 15 erfolgt entsprechend dem Ausführungsbeispiel nach Figur 1 mittels einer Nietverbindung 25. Die Lagerwelle 11 weist ein axiales Anschlagmittel 18 auf, welches als radial von der Lagerwelle 11 abstehender Bund 21 ausgebildet ist. Der Bund 21 ist zum zweiten Ende 16 hin mit einer Auflagefläche 29 versehen, welche zur Auflage des mit dem zweiten Ende 16 zu verbindenden Wischarms 17 dient. Die Lagerwelle 11 ist ferner am ersten Ende 14 mit einer Anschlagkante 30 versehen, welche während der Montage des Wischerlagers 10 eine in axialer Richtung korrekte Positionierung des Lagerelements 15 in Bezug auf die Lagerwelle 11 gewährleistet.

Wie aus Figur 2 hervorgeht, weist das als Bund 21 ausgebildete Anschlagmittel 18 eine Anschlagfläche 20 auf, die mit einer Kontaktfläche 19 des Lagergehäuses 12 in Wirkverbindung steht. Die Kontaktfläche 19 des Lagergehäuses 12 ist als oberflächenstrukturierte Fläche und die Anschlagfläche 20 der Lagerwelle 11 als ebene Fläche ausgebildet. Die oberflächenstrukturierte Kontaktfläche 19 des Lagergehäuses 12 dient zur Bereitstellung eines axialen Dichtmittels 23, welches als geschlossener Ring mit der Anschlagfläche 20 des Bunds 21 in Berührungskontakt steht unter Ausbildung eines hermetischen Abschlusses. Das Dichtmittel 23 ist als wenigstens ein, und im vorliegenden Fall als drei Ringwulste 23 auf der Kontaktfläche 19 des Lagergehäuses 12 ausgebildet. Dabei ist das Lagergehäuse 12 aus einem Material hergestellt, das eine im Vergleich zum Material der Lagerwelle 11 geringere Eigensteifigkeit aufweist. Beispielsweise kann das Lagergehäuse 12 aus einem elastisch und/oder plastisch verformbaren Plastikmaterial und die Lagerwelle 11 aus einem verhältnismäßig steifen metallischen Material hergestellt sein. Die als Dichtmittel wirkenden drei Ringwulste 23 erstrecken sich zueinander koaxial auf der stirnseitig mit dem Bund 21 in Wirkverbindung stehenden Kontaktfläche 19 des Lagergehäuses 12. Die mit' den Ringwulsten 23 in Berührungskontakt stehende Anschlagfläche 20 erstreckt sich in radialer Richtung über den gesamten, ringförmigen, von der Lagerwelle 11 radial abstehenden, geschlossenen Bund 21.

Figur 3 zeigt eine zweite Ausführungsform des Wischerlagers 10, gemäß welcher die Anschlagfläche 20 des Bunds 21 als Grundfläche einer Aufnahmenut 24 ausgebildet ist, in welcher das Dichtmittel 23 nach Herstellen der Wirkverbindung zwischen Anschlagfläche 20 und Kontaktfläche 19 radial nach außen abgeschirmt ist. Bei diesem Ausführungsbeispiel nach Figur 3 sind als Dichtmittel 23 lediglich zwei zueinander koaxial auf der stirnseitigen Kontaktfläche 19 des Lagergehäuses 12 sich ringförmig erstreckende und in axialer Richtung von der Kontaktfläche 19 abstehende Ringwulste 23 vorgesehen. Auch die Aufnahmenut 24 erstreckt sich in Bezug auf das Dichtmittel 23 koaxial zur Längsachse 13 als geschlossener Aufnahmering. Bei den in den Figuren 1 bis 3 dargestellten zwei Ausführungsformen der Wirkverbindung zwischen Anschlagfläche 20 und Kontaktfläche 19 ist die Lagerwelle 11 als einteiliges Bauteil ausgebildet.

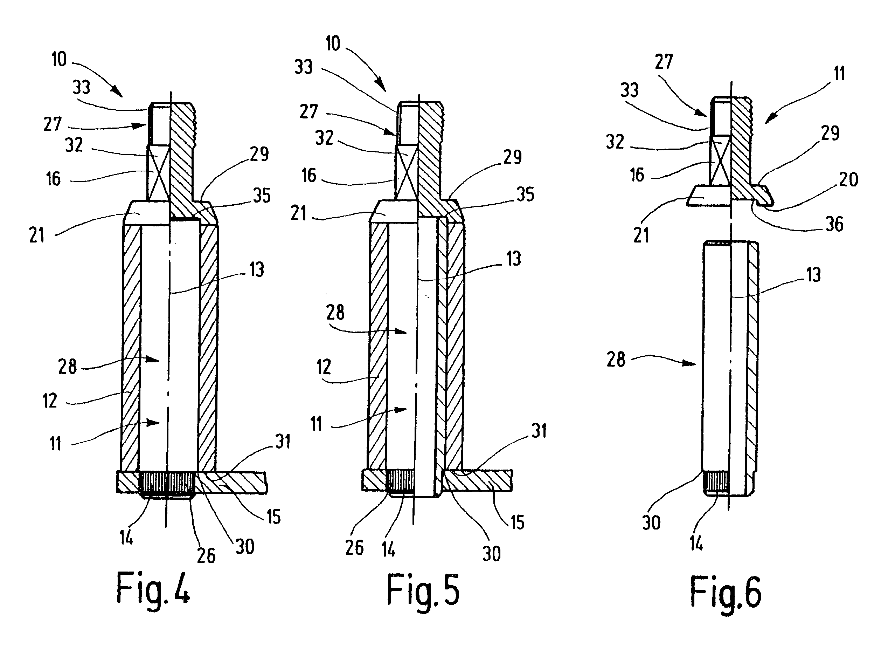

Gemäß einer dritten Ausführungsform nach Figur 4 ist die Lagerwelle 11 als zweiteiliges Bauteil ausgebildet, wobei die Lagerwelle 11 aus einem Kopfteil 27 und einem an diesem zu der Längsachse 13 der Lagerwelle 11 koaxial befestigten und insbesondere angeschweißten Schaftteil 28 besteht. Gemäß dem Ausführungsbeispiel nach Figur 4 ist der Schaftteil 28 als Vollwelle ausgebildet, welche mittels einer Schweißung 35, insbesondere einer Kondensatorentladungsschweißung, mit dem Kopfteil 27 verbunden ist. Die Befestigung der Lagerwelle 11 am ersten Ende 14 mit dem Lagerelement 15 erfolgt gemäß diesem Ausführungsbeispiel mittels einer kraftschlüssigen Verbindung 26, welche beispielsweise durch eine Verstemmung des ersten Endes 14 der Lagerwelle 11 mit dem entsprechend ausgebildeten, vorzugsweise eine zylindrische Durchgangsöffnung 40 aufweisenden Lagerelement 15 erhaltbar ist.

Figur 5 zeigt eine vierte Ausführungsform des Wischerlagers 10, gemäß welcher die Lagerwelle 11 wiederum zweiteilig ausgebildet ist, das heißt mit einem Kopfteil 27 und einem Schaftteil 28, welche mittels einer Schweißung 35 miteinander verbunden sind. Der Schaftteil 28 ist allerdings nicht wie in Figur 4 als Vollwelle, sondern als Hohlwelle beziehungsweise Rohr ausgebildet. Ansonsten entspricht die vierte Ausführungsform nach Figur 5 der dritten Ausführungsform nach Figur 4.

In Figur 6 ist die zweiteilige Lagerwelle 11 vor Verbinden des Kopfteils 27 mit dem Schaftteil 28 mittels einer Schweißung dargestellt. Der Bund 21 des Kopfteils 27 weist stirnseitig einen Sitz 36 auf, um eine montagefreundliche Positionierung des Schaftteils 28 an dem Kopfteil 27 zu gewährleisten zum Herstellen einer korrekten Verbindungsschweißung zwischen Schaftteil 28 und Kopfteil 27 im Sitz 36. Dabei erstreckt sich die als geschlossener Ring ausgebildete Anschlagfläche 20 der Lagerwelle 11 umfangsförmig derart um den innenliegenden Sitz 36, dass sie auf der entsprechenden Stirnseite des Kopfteils 27 in axialer Richtung und in Bezug auf den Sitz 36 beabstandet vorsteht. Dadurch wird eine negative Beeinflussung der Anschlagfläche 20 durch die Verbindungsschweißung, beispielsweise durch eine infolge einer thermischen Beeinflussung sich anstellenden Verformung, verhindert. Das erste Ende 14 der Lagerwelle 11 beziehungsweise des Schaftteils 28 weist eine zum Herstellen der kraftschlüssigen Verbindung 26 mit dem Lagerelement 15 geeignete, oberflächenstrukturierte, im wesentlichen zylindrische Außenfläche auf.

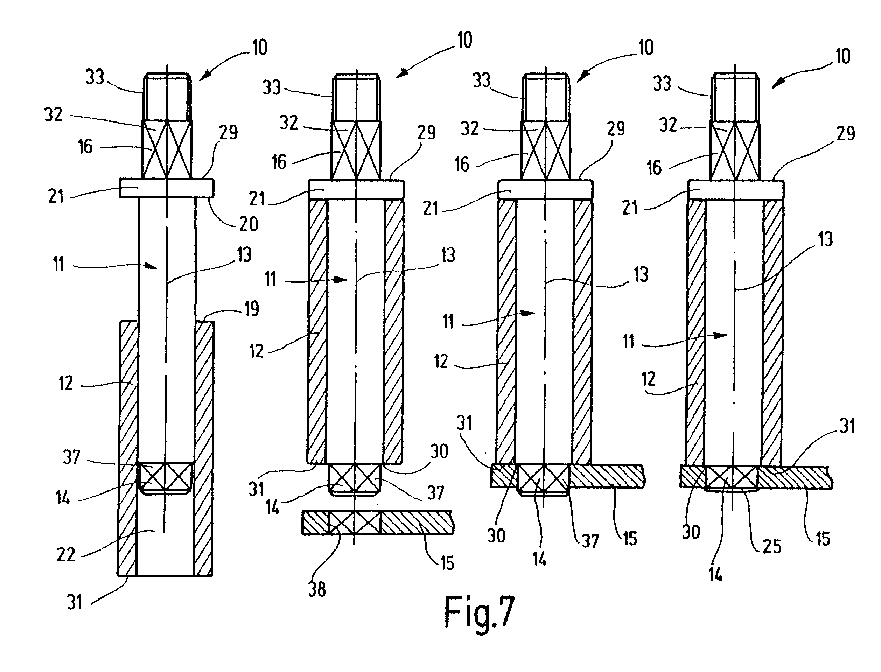

Figur 7 illustriert in vier aufeinanderfolgenden Verfahrensschritten die Montage des Wischerlagers 10 und deren Befestigung am Lagerelement 15. Es handelt sich hierbei um die Montage der Ausführungsform gemäß Figur 1. Als erster, in Figur 7 links dargestellter Montageschritt wird die Lagerwelle 11 mit ihrem Schaft in das Lagergehäuse 12 bis zum Herstellen eines Berührungskontakts zwischen der Kontaktfläche 19 des Lagergehäuses 12 und der Anschlagfläche 20 der Lagerwelle 11 eingeführt. Der Schaft der Lagerwelle 11 wird hierbei durch einen in Bezug auf die Längsachse 13 rotationssymmetrischen und insbesondere zylindrischen Aufnahmeraum 22 des Lagergehäuses 12 aufgenommen. Entsprechend der in Figur 7 von links gesehen zweiten Darstellung ist der Schaft der Lagerwelle 11 vollständig in das Lagergehäuse 12 eingeführt und in dessen Aufnahmeraum 22 derart aufgenommen, dass die Lagerwelle beziehungsweise deren Schaft in radialer Richtung durch die Wandung des rohrförmig ausgebildeten Lagergehäuses 12 geführt ist. Das als vorzugsweise Sechskant 37 ausgebildete und axial aus dem Lagergehäuse 12 vorstehende erste Ende 14 wird in die entsprechend ausgebildete Sechskant-Durchgangsöffnung 38 des Lagerelements 15 derart geschoben, dass ein freier Endabschnitt des ersten Endes 14 aus der Durchgangsöffnung 38 nach außen absteht (siehe von links gesehen dritte Abbildung der Figur 7). Hierbei kann ein kleiner, nicht dargestellter Spalt zwischen Anschlagkante 30 und Kontaktfläche des Lagerelements 15 verbleiben. Gemäß der vierten Abbildung der Figur 7 wird der über das Lagerelement 15 vorstehende Endabschnitt des ersten Endes 14 der Lagerwelle 11 mittels einer von außen zu beaufschlagenden Druckkraft derart plastisch verformt, dass sich eine Nietverbindung 25 zwischen Lagerwelle 11 und Lagerelement 15 ausbildet. Dabei kann zur Einleitung der zum Herstellen der Nietverbindung 25 notwendigen äußeren Druck- beziehungsweise Verformungskraft die Auflagefläche 29 des Bunds 21, welche als von außen frei zugängliche Ringfläche zum zweiten Ende 16 der Lagerwelle 11 hin gerichtet ist, als äußere Abstützfläche des Wischerlagers 10 genutzt werden. Während das Herstellen der Nietverbindung 25 mittels einer axialen Druckkraft stellt sich gleichzeitig eine elastische und/oder plastische Verformung der. Oberflächenstrukturierung der Kontaktfläche 19 des Lagergehäuses 12, das heißt der als axiales Dichtmittel 23 wirkenden Ringwulste, durch die Wirkverbindung der mit diesen in Berührungskontakt stehende, ebene Anschlagfläche 20 des Bunds 21 der Lagerwelle 11 ein. Diese elastische und/oder plastische Verformung der Oberflächenstrukturierung führt zu einer entsprechenden, jedoch geringfügigen Reduzierung der axialen Länge des Lagergehäuses 12, so dass der obenerwähnte und nicht in Figur 7 dargestellte, kleine Spalt zwischen Anschlagkante 30 und Lagerelement 15 durch die Relativbewegung des Lagergehäuses 12 und des Lagerelements 15 in Bezug auf die Lagerwelle 11 geschlossen und somit eliminiert wird. In dieser Weise ist es möglich, mittels einer zur Befestigung der Lagerwelle 11 an dem Lagerelement 15 notwendigen Druckkraft schnell und präzise wiederholbar den gewünschten beziehungsweise notwendigen Zwischenabstand zwischen Lagerelement 15 und Wischarm 17 (nicht in Figur 7 dargestellt) herzustellen. Das in dieser Weise konzipierte Wischerlager 10 ermöglicht somit in montagefreundlicher und zuverlässiger Weise einen Toleranzausgleich zwischen den einzelnen Bauteilen (Lagerwelle 11, Lagerhülse 12, Lagerelement 15). Ferner wird durch die elastische und/oder plastische Verformung der Oberflächenstrukturierung eine Dichtverbindung zwischen Anschlagfläche 20 des Bunds 21 der Lagerwelle 11 und Kontaktfläche 19 des Lagergehäuses 12 geschaffen.

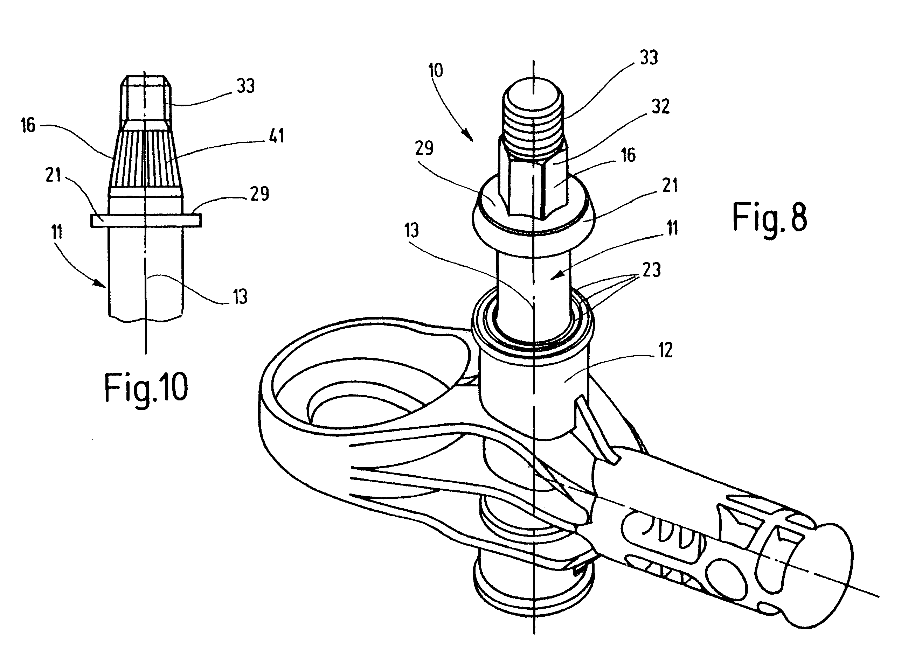

Figur 8 zeigt eine schematische, perspektivische Darstellung, gemäß welcher die Lagerwelle 11 mit ihrem Schaft in den Aufnahmeraum 22 (nicht in Figur 8 dargestellt) des Lagergehäuses 12 teilweise eingeführt ist. Das Wischerlager 10 nach Figur 8 entspricht somit prinzipiell demjenigen der linken Darstellung von Figur 7.

Figur 9 zeigt das vollständig montierte Wischerlager 10, welches eine zweiteilige Lagerwelle 11 aufweist, die aus dem Kopfteil 27 und dem Schaftteil 28 besteht, welche mittels der Schweißung 35 stirnseitig miteinander verbunden sind. Die Lagerwelle 11 ist mit ihrem ersten Ende 14 mittels der Nietverbindung 25 an dem Lagerelement 15 befestigt, welches zum Herstellen der Nietverbindung 25 mit der Sechskant-Durchgangsöffnung 38 versehen ist. An ihrem zweiten Ende 16 ist die Lagerwelle 11 mit dem Wischarm 17 drehfest in Bezug auf die Längsachse 13 verbunden. Diese Verbindung zwischen Lagerwelle 11 und Wischarm 17 wird dadurch erhalten, dass der als Außensechskant ausgebildete Anschlussteil 32 des zweiten Endes 16 der Lagerwelle 11 mit einer entsprechend als Innensechskant ausgebildeten Durchgangsöffnung 39 des Wischarms 17 operativ zusammenwirkt. Eine Mutter 34 ist endseitig auf das Außengewinde 33 des zweiten Endes 16 der Lagerwelle 11 derart aufgeschraubt, dass der Wischarm 17 in axialer Richtung, das heißt in Richtung der Längsachse 13, am Wischerlager 10 fixiert ist, wobei der Wischarm 17 bündig an der Auflagefläche 29 des Bunds 21 der Lagerwelle 11 anliegt.

Figur 10 zeigt eine weitere, alternative Ausführungsform der Lagerwelle 11, deren zweites Ende 16 ein konusförmiges, mit einer Rändelung versehenes Anschlussteil 41 aufweist. Ansonsten entspricht das zweite Ende 16 der Lagerwelle 11 der Figur 10 demjenigen der Figur 1. Eine Lagerwelle 11 mit einem konusförmigen Anschlussteil 41 ist fertigungstechnisch verhältnismäßig einfach herstellbar und ermöglicht eine zuverlässige Befestigung des Wischarms 17 an dem Wischerlager 10.

Es sind verschiedene Kombinationen der jeweiligen Ausführungsformen des Wischerlagers 10 untereinander möglich. Beispielsweise kann ein gemäß Figur 4 oder 5 ausgebildetes Wischerlager 10 auch mit einem Bund 21 versehen sein, der eine Aufnahmenut 24 aufweist. Ferner besteht die Möglichkeit, ein gemäß Figur 1 ausgebildetes Wischerlager 10 mittels einer kraftschlüssigen Verbindung (Verstemmung) gemäß Figur 4 oder 5 an dem Lagerelement 15 zu befestigen.

Gemäß einer nicht dargestellten Ausführungsform kann eine mit dem Lagerelement 15 in Berührungskontakt kommende Stirnfläche 31 des Lagergehäuses 12 ebenfalls mit einem entsprechenden Dichtmittel versehen sein.

## Patentansprüche

1. Wischerlager für eine Wischvorrichtung eines Fahrzeugs, eine Lagerwelle (11) enthaltend, die durchgehend in einem Lagergehäuse (12) aufgenommen und mit einem Lagerelement (15) und einem Wischarm (17) derart verbunden ist, das ein Drehmoment vom Lagerelement (15) auf den Wischarm (17) übertragbar ist, wobei die Lagerwelle (11) ein axiales Anschlagmittel (18) mit einer Anschlagfläche (20) aufweist, **dadurch gekennzeichnet, dass** die Anschlagfläche (20) mit einer Kontaktfläche (19) des Lagergehäuses (12) in Wirkverbindung steht, wobei die Kontaktfläche (19) und/oder die Anschlagfläche (20) oberflächenstrukturiert sind.

2. Wischerlager nach Anspruch 1, **dadurch gekennzeichnet, dass** das Lagergehäuse (12) die Lagerwelle (11) radial umschließt und die Lagerwelle (11) zwei aus dem Lagergehäuse (12) vorstehende Enden (14,16) aufweist, wobei ein erstes Ende (14) an dem Lagerelement (15) befestigt und ein zweites Ende (16) mit dem Wischarm (17) verbunden ist.

3. Wischerlager nach einem der vorhergehenden Ansprüche, **dadurch gekennzeichnet, dass** die Anschlagfläche (20) der Lagerwelle (11) eben und die Kontaktfläche (19) des Lagergehäuses (12) oberflächenstrukturiert ausgebildet ist.

4. Wischerlager nach einem der vorhergehenden Ansprüche, **dadurch gekennzeichnet, dass** das Anschlagmittel (18) als ringförmiger, von der Lagerwelle (11) radial abstehender, geschlossener Bund (21) ausgebildet ist.

5. Wischerlager nach Anspruch 3, **dadurch gekennzeichnet, dass** die oberflächenstrukturierte Kontaktfläche (19) als ringförmige Stirnfläche des einen in Bezug auf die Längsachse rotationssymmetrischen und insbesondere zylindrischen Aufnahmeraum (22) aufweisenden Lagergehäuses (12) ausgebildet ist.

6. Wischerlager nach Anspruch 3, **dadurch gekennzeichnet, dass** die oberflächenstrukturierte Kontaktfläche (19) ein axiales Dichtmittel (23) aufweist, welches als geschlossener Ring mit der Anschlagfläche (20) des Bunds (21) in Berührungskontakt steht unter Ausbildung eines hermetischen Abschlusses.

7. Wischerlager nach Anspruch 6 **dadurch gekennzeichnet, dass** das Dichtmittel (23) als wenigstens ein Ringwulst (23) auf der Kontaktfläche (19) des Lagergehäuses (12) ausgebildet ist und das Lagergehäuse (12) aus einem Material hergestellt ist, das eine in Bezug auf das Material der Lagerwelle (11) geringere Eigensteifigkeit aufweist.

8. Wischerlager nach Anspruch 4, **dadurch gekennzeichnet, dass** sich die Anschlagfläche (20) in radialer Richtung über die gesamte Breite des Bunds (21) erstreckt.

9. Wischerlager nach Anspruch 6, **dadurch gekennzeichnet, dass** die Anschlagfläche (20) als Grundfläche einer Aufnahmenut (24) ausgebildet ist, in welcher das Dichtmittel (23) radial nach außen abgeschirmt ist.

10. Wischerlager nach einem der vorhergehenden Ansprüche, **dadurch gekennzeichnet, dass** die Lagerwelle (11) an dem Lagerelement (15) mittels einer Nietverbindung (25) befestigt ist.

11. Wischerlager nach einem der vorhergehenden Ansprüche, **dadurch gekennzeichnet, dass** die Lagerwelle (11) an dem Lagerelement (15) mittels einer kraftschlüssigen Verbindung (26) befestigt ist.

12. Wischerlager nach einem der vorhergehenden Ansprüche, **dadurch gekennzeichnet, dass** die Lagerwelle (11) einteilig ausgebildet ist.

13. Wischerlager nach einem der vorhergehenden Ansprüche, **dadurch gekennzeichnet, dass** die Lagerwelle (11) aus einem Kopfteil (27) und einem an diesem zu einer Längsachse (13) der Lagerwelle (11) koaxial befestigten und insbesondere angeschweißten Schaftteil (28) besteht.

14. Wischerlager nach einem der vorhergehenden Ansprüche, **dadurch gekennzeichnet, dass** der Schaftteil (28) als Vollwelle ausgebildet ist.

15. Wischerlager nach einem der vorhergehenden Ansprüche, **dadurch gekennzeichnet, dass** der Schaftteil (28) als Rohr ausgebildet ist.

16. Wischerlager nach Anspruch 4, **dadurch gekennzeichnet, dass** der Bund (21) eine Auflagefläche (29) für den Wischarm (17) aufweist.

17. Wischerlager nach einem der vorhergehenden Ansprüche, **dadurch gekennzeichnet, dass** die Lagerwelle (11) eine Anschlagkante (30) für das Lagerelement (15) aufweist.

18. Wischerlager nach einem der vorhergehenden Ansprüche, **dadurch gekennzeichnet, dass** eine mit dem Lagerelement (15) in Berührungskontakt kommende Stirnfläche (31) des Lagergehäuses (12) mit einem Dichtmittel versehen ist.

19. Verfahren zum Montieren eines Wischerlagers nach einem der vorherigen Ansprüche, **gekennzeichnet durch** folgende Verfahrensschritte:
- Einführen der Lagerwelle (11) mit ihrem Schaft in das Lagergehäuse (12) bis zum Herstellen eines Berührungskontakts zwischen der Kontaktfläche (19) des Lagergehäuses (12) und der Anschlagfläche (20) der Lagerwelle (11);
- Beaufschlagen der Lagerwelle (11) und/oder des Lagergehäuses (12) mit einer axialen Druckkraft unter Erzielung einer elastischen und/oder plastischen Verformung der Oberflächenstrukturierung und gleichzeitiges Herstellen einer Befestigung der Lagerwelle (11) mit ihrem ersten Ende (14) an dem Lagerelement (15) mittels einer axialen Druckkraft; Verbinden des Wischarms (17) mit dem zweiten Ende (16) der Lagerwelle (11).

## Revendications

1. Palier d'essuie-glace pour un ensemble essuie-glace de véhicule à moteur, comprenant un arbre de palier (11) logé dans un boîtier de palier (12) et relié à un élément de palier (15) et à un bras d'essuie-glace (17) de manière à pouvoir transmettre un couple de l'élément de palier (15) au bras d'essuie-glace (17), l'arbre de palier (11) portant un moyen de butée (18) présentant une portée de butée (20),
**caractérisé en ce que**
la portée de butée (20) coopère avec une portée de contact (19) du boîtier de palier (12), ces deux portées (19 et 20) ayant leurs surfaces structurées.

2. Palier d'essuie-glace selon la revendication 1,
**caractérisé en ce que**
le boîtier de palier (12) entoure radicalement l'arbre de palier (11) dont les deux extrémités (14,16) dépassent le boîtier de palier (12), la première extrémité (14) étant fixée à l'élément de palier (15) et la seconde (16) au bras d'essuie-glace (17).

3. Palier d'essuie-glace selon l'une quelconque des revendications précédentes,
**caractérisé en ce que**
la portée de butée (20) de l'arbre de palier (11) est plane et la portée de contact (19) du boîtier de palier (12) est structurée en surface.

4. Palier d'essuie-glace selon l'une quelconque des revendications précédentes,
**caractérisé en ce que**
le moyen de butée (18) est un collet fermé (21) de forme annulaire en saillie radiale sur l'arbre de palier (11).

5. Palier d'essuie-glace selon la revendication 3,
**caractérisé en ce que**
la portée de contact (19) à surface structurée est la face frontale de forme annulaire d'un boîtier de palier (12) présentant un volume d'accueil (22) de révolution autour de l'axe longitudinal, et en particulier cylindrique.

6. Palier d'essuie-glace selon la revendication 3,
**caractérisé en ce que**
la portée de contact (19) à surface structurée présente un moyen d'étanchéité axiale (23) qui, sous la forme d'un anneau fermé est en contact avec la portée de butée (20) de collet (21) en créant une fermeture hermétique.

7. Palier d'essuie-glace selon la revendication 6,
**caractérisé en ce que**
le moyen d'étanchéité (23) est constitué par au moins un bourrelet annulaire (23) que présente la portée de contact (19) du boîtier de palier (12), ce boîtier étant fabriqué en un matériau qui présente une rigidité propre inférieure à celle de l'arbre de palier (11).

8. Palier d'essuie-glace selon la revendication 4,
**caractérisé en ce que**
la portée de butée (20) couvre radialement toute la largeur du collet (21).

9. Palier d'essuie-glace selon la revendication 6,
**caractérisé en ce que**
la portée de butée (20) est constituée par la surface du fond d'une rainure d'accueil (24) dans laquelle le moyen d'étanchéité (23) est radialement abrité vis-à-vis de l'extérieur.

10. Palier d'essuie-glace selon l'une quelconque des revendications précédentes,
**caractérisé en ce que**
l'arbre de palier (11) est fixé sur l'élément de palier (15) par une liaison rivetée (25).

11. Palier d'essuie-glace selon l'une quelconque des revendications précédentes,
**caractérisé en ce que**
l'arbre de palier (11) est fixé sur l'élément de palier (15) par une liaison à force (26).

12. Palier d'essuie-glace selon l'une quelconque des revendications précédentes,
**caractérisé en ce que**
l'arbre de palier (11) est monobloc.

13. Palier d'essuie-glace selon l'une quelconque des revendications précédentes,
**caractérisé en ce que**
l'arbre de palier (11) est composé d'une partie de tête (27) et d'une partie de tige (28) fixée sur la précédente coaxialement à un axe longitudinal (13) de l'arbre (11) notamment par soudure.

14. Palier d'essuie-glace selon l'une quelconque des revendications précédentes,
**caractérisé en ce que**
la partie de tige (28) est un arbre plein.

15. Palier d'essuie-glace selon l'une quelconque des revendications précédentes,
**caractérisé en ce que**
la partie de tige (28) est un tube.

16. Palier d'essuie-glace selon l'une quelconque des revendications précédentes,
**caractérisé en ce que**
le collet (21) présente une portée d'appui (29) pour le bras d'essuie-glace (17).

17. Palier d'essuie-glace selon l'une quelconque des revendications précédentes,
**caractérisé en ce que**
l'arbre de palier (11) présente un bord de butée (30) pour l'élément de palier (15).

18. Palier d'essuie-glace selon l'une quelconque des revendications précédentes,
**caractérisé en ce qu'**
une face frontale (31) du boîtier de palier (12) venant en contact avec l'élément de palier (15) est équipée d'un moyen d'étanchéité.

19. Procédé de montage d'un essuie-glace selon l'une quelconque des revendications précédentes présentant les étapes suivantes :
**caractérisé en ce que**
- introduction de l'arbre de palier (11) par sa tige dans le boîtier de palier (12) jusqu'à établissement d'un contact entre la portée de contact du boîtier de palier (12) et la portée de butée (19) de l'arbre de palier (11),
- application sur l'arbre de palier (11) et/ou le boîtier de palier (12) d'une force axiale de pression provoquant une déformation élastique et/ou plastique de la structuration superficielle, avec en même temps réalisation de la fixation de l'arbre de palier (11) par sa première extrémité (14) sur l'élément de palier (15), par pression axiale,
- liaison du bras d'essuie-glace (17) avec la seconde extrémité (16) de l'arbre de palier (11).

## Claims

1. Wiper bearing for a wiper device of a vehicle, containing a bearing shaft (11) which is accommodated in a continuous manner in a bearing housing (12) and is connected to a bearing element (15) and a wiper arm (17) in such a manner that a torque can be transmitted from the bearing element (15) to the wiper arm (17), the bearing shaft (11) having an axial stop means (18) with a stop face (20), **characterized in that** the stop face (20) is operatively connected to a contact face (19) of the bearing housing (12), the contact face (19) and/or the stop face (20) having a textured surface.

2. Wiper bearing according to Claim 1, **characterized in that** the bearing housing (12) radially surrounds the bearing shaft (11) and the bearing shaft (11) has two ends (14, 16) projecting out of the bearing housing (12), a first end (14) being fastened to the bearing element (15) and a second end (16) being connected to the wiper arm (17).

3. Wiper bearing according to one of the preceding claims, **characterized in that** the stop face (20) of the bearing shaft (11) is of flat design and the contact face (19) of the bearing housing (12) is designed with a textured surface.

4. Wiper bearing according to one of the preceding claims, **characterized in that** the stop means (18) is designed as an annular, closed collar (21) which protrudes radially from the bearing shaft (11).

5. Wiper bearing according to Claim 3, **characterized in that** the contact face (19) having a textured surface is designed as an annular end face of the bearing housing (12) which has a receiving space (22) which is rotationally symmetrical with respect to the longitudinal axis and, in particular, is cylindrical.

6. Wiper bearing according to Claim 3, **characterized in that** the contact face (19) having a textured surface has an axial sealing means (23) which is in touching contact as a closed ring with the stop face (20) of the collar (21) forming a hermetic seal.

7. Wiper bearing according to Claim 6, **characterized in that** the sealing means (23) is designed as at least one annular bead (23) on the contact face (19) of the bearing housing (12) and the bearing housing (12) is produced from a material which has a lower inherent stiffness than the material of the bearing shaft (11).

8. Wiper bearing according to Claim 4, **characterized in that** the stop face (20) extends over the entire width of the collar (21) in the radial direction.

9. Wiper bearing according to Claim 6, **characterized in that** the stop face (20) is designed as a base face of a receiving groove (24) in which the sealing means (23) is shielded radially to the outside.

10. Wiper bearing according to one of the preceding claims, **characterized in that** the bearing shaft (11) is fastened to the bearing element (15) by means of a rivet connection (25).

11. Wiper bearing according to one of the preceding claims, **characterized in that** the bearing shaft (11) is fastened to the bearing element (15) by means of a frictional connection (26).

12. Wiper bearing according to one of the preceding claims, **characterized in that** the bearing shaft (11) is designed as a single part.

13. Wiper bearing according to one of the preceding claims, **characterized in that** the bearing shaft (11) comprises a head part (27) and a stem part (28) which is fastened, and, in particular, is welded, to the said head part coaxially with respect to a longitudinal axis (13) of the bearing shaft (11).

14. Wiper bearing according to one of the preceding claims, **characterized in that** the stem part (28) is designed as a solid shaft.

15. Wiper bearing according to one of the preceding claims, **characterized in that** the stem part (28) is designed as a tube.

16. Wiper bearing according to Claim 4, **characterized in that** the collar (21) has a supporting surface (29) for the wiper arm (17).

17. Wiper bearing according to one of the preceding claims, **characterized in that** the bearing shaft (11) has a stop edge (30) for the bearing element (15).

18. Wiper bearing according to one of the preceding claims, **characterized in that** an end face (31) of the bearing housing (12), which face comes into touching contact with the bearing element (15), is provided with a sealing means.

19. Method for fitting a wiper bearing according to one of the preceding claims, **characterized by** the following method steps:
- introducing the bearing shaft (11) by its stem into the bearing housing (12) until a touching contact between the contact face (19) of the bearing housing (12) and the stop face (20) of the bearing shaft (11) is produced;
- subjecting the bearing shaft (11) and/or the bearing housing (12) to an axial compressive force obtaining elastic and/or plastic deformation of the textured surface and at the same time producing a fastening of the bearing shaft (11) by its first end (14) to the bearing element (15) by means of an axial compressive force;
- connecting the wiper arm (17) to the second end (16) of the bearing shaft (11).
